# EUROPEAN PATENT SPECIFICATION

(11) **EP 3 441 885 B1**
(45) Date of publication and mention of the grant of the patent: **25.11.2020**
(21) Application number: 18182324.6
(22) Date of filing: 06.07.2018
(51) Int. Cl.: G06F 12/02

(54) **TECHNOLOGIES FOR CACHING PERSISTENT TWO-LEVEL MEMORY DATA**
TECHNOLOGIEN ZUR ZWISCHENSPEICHERUNG VON PERSISTENTEN ZWEISTUFIGEN SPEICHERDATEN
TECHNOLOGIES POUR MISE EN MÉMOIRE CACHE DE DONNÉES DE MÉMOIRE PERSISTANTE À DEUX NIVEAUX

(30) Priority: 07.08.2017 US 201715670320
(43) Date of publication of application: 13.02.2019
(73) Proprietor: INTEL Corporation, Santa Clara, CA 95054 (US)
(72) Inventor: SWAMINATHAN, Muthukumar P., Folsom, CA 95630 (US); NACHIMUTHU, Murugasamy K., Beaverton, OR 97007 (US); NATU, Mahesh S., Sunnyvale, CA 94086 (US)
(74) Representative: Rummler, Felix

(56) References cited:
- WO-A1-2013/095437
- JP-A- H07 146 820
- US-A1- 2003 204 702

## Description

### BACKGROUND

Generally, memory used to store data in a computing system can be volatile to store volatile data or non-volatile to store persistent data. Volatile data cached in volatile memory are generally used as temporary data to support the functionality of a program during the run-time of the program. On the other hand, persistent data structures stored in non-volatile or persistent memory are available beyond the run-time of a program and may be reused across power cycles.

As computing capabilities are enhanced in processors, one concern is the speed at which persistent memory may be accessed by a processor. With current non-volatile memory technology, the persistent memory may be directly accessible by the processor for executing write and read operations; however, because the non-volatile memory is far memory, the latency of far memory can have a direct effect on overall system performance.

WO2013/095437 A1 relates to a method for intelligently flushing data from a processor cache. US 2003/0204702 A1 relates to memory management in computer systems and embedded processing devices.

The invention is set out in the appended set of claims. The dependent claims set out particular embodiments.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a compute device for caching persistent two-level memory (2LM) data;
FIG. 2 is a simplified block diagram of at least one embodiment of an environment that may be established by the compute device of FIG. 1;
FIG. 3 is a simplified flow diagram of at least one embodiment of a method for setting up caching for persistent 2LM data that may be executed by the compute device of FIGS. 1 and 2;
FIG. 4 is a simplified flow diagram of at least one embodiment of a method for performing a persistent 2LM data operation that may be executed by the compute device of FIGS. 1 and 2; and
FIG. 5 is a simplified flow diagram of at least one embodiment of a method for system shutdown that may be executed by the compute device of FIGS. 1 and 2.

### DETAILED DESCRIPTION OF THE DRAWINGS

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

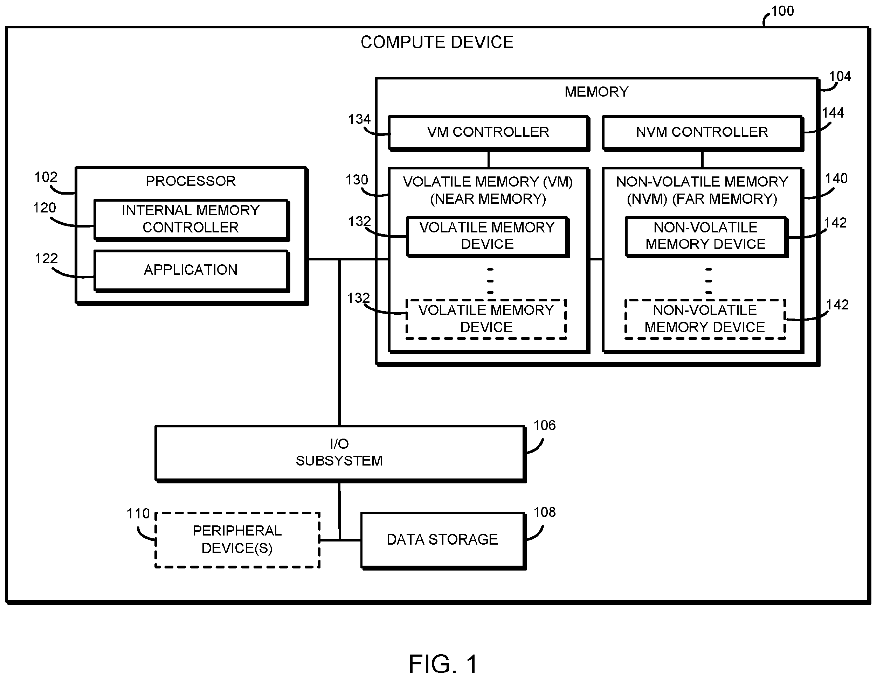

As shown in FIG. 1, an illustrative compute device 100 for caching persistent two-level memory (2LM) data includes a processor 102 and a memory 104, which is partitioned into two levels. One level, referred to as the "near memory", includes volatile memory 130. The second level, referred to as the "far memory", is embodied as a relatively slower memory (e.g., lower bandwidth and/or higher latency) as compared to the near memory (e.g., the volatile memory 130) and, in the illustrative embodiment, comprises non-volatile memory 140. In other embodiments, the far memory may be volatile. The far memory is presented to an operating system executed by the processor 102 as main memory, while the near memory is transparent to the operating system. In operation, and as explained in more detail herein, the near memory may act as a cache for the far memory, providing the processor 102 with faster access to data than would be possible if the data was only present in the far memory. Further, and as described in more detail below, in use, the processor 102 is configured to set up caching of persistent data associated with an application 122 that is mapped to a persistent memory address space of the non-volatile memory 140. To do so, the processor 102 configures the persistent memory address space to operate in a persistent two-level memory (2LM) mode. As described further below, the persistent 2LM mode provides direct access to the non-volatile memory 140 to store and/or load the persistent 2LM data and further allows the operating system to cache accesses to the persistent memory address space in the volatile memory 130 without implementing any changes to hardware components of the compute device 100.

The processor 102 may be embodied as any type of processor capable of performing the functions described herein. For example, the processor 102 may be embodied as a single or multi-core processor(s), digital signal processor, field programmable gate arrays (FPGA), microcontroller, or other processor or processing/controlling circuit. Similarly, the memory 104 may be embodied as any type of volatile and/or non-volatile memory or data storage capable of performing the functions described herein. In some embodiments, the processor 102 and the memory 104 may form a portion of a system-on-a-chip (SoC) and be incorporated, along with other components of the compute device 100, onto a single integrated circuit chip.

The memory 104 is communicatively coupled to the processor 102 via the I/O subsystem 106, which may be embodied as circuitry and/or components to facilitate input/output operations with the processor 102, the memory 104, and other components of the compute device 100. For example, the I/O subsystem 106 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 106 may form a portion of a system-on-a-chip (SoC) and be incorporated, along with the processor 102, the memory 104, and other components of the compute device 100, on a single integrated circuit chip.

The internal memory controller 120 may be embodied as any type of control device, circuitry, or collection of hardware devices capable of writing, reading, locating, and replacing data in the memory 104. In the illustrative embodiment, the internal memory controller 120 is configured to control memory access to the volatile memory 130 and the non-volatile memory 140. To do so, the internal memory controller 120 may control a source address decoder and a target address decoder of the processor 102 by converting between different modes of operation for a memory address space. It should be appreciated that a memory address space is a set of discrete logical addresses, each of which may correspond to a different physical memory address in the volatile memory 130 and/or the non-volatile memory 140. By configuring modes of operation for the logical addresses, the internal memory controller 120 may control memory access to one or more volatile and non-volatile memory devices 132, 142 and enable caching of persistent 2LM data (e.g., in the volatile memory 130) that would typically only be stored in and accessed from the non-volatile memory 140.

The memory 104 may be embodied as any type of data storage capable of storing data. In the illustrative embodiment, the memory 104 includes the volatile memory 130 controlled by the volatile memory controller 134 and the non-volatile memory 140 controlled by the non-volatile memory controller 144. It should be appreciated that the volatile memory controller 134 and the non-volatile memory controller 144 are configured to communicate with the internal memory controller 120. For example, the volatile memory controller 134 is configured to receive application data instructions to execute and cache the application data in the volatile memory 130. On the other hand, the non-volatile memory controller 134 is configured to receive application data instructions to execute and store the application data in the non-volatile memory 140. In some embodiments, the VM controller 134 and/or the NVM controller 144 may form portions of other components of the compute device 100, such as the I/O subsystem 106.

The volatile memory 130 may be embodied as any type of data storage capable of storing data while power is supplied to the volatile memory 130. For example, in the illustrative embodiment, the volatile memory 130 is embodied as one or more volatile memory devices 132, and is periodically referred to hereinafter as volatile memory 130 with the understanding that the volatile memory 130 may be embodied as other types of non-persistent data storage in other embodiments. The volatile memory devices of the volatile memory 130 may be embodied as any storage medium that requires power to maintain the state of data stored by the medium. Non-limiting examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards and communication interfaces of the storage devices that implement such standards may be referred to as DDR-based interfaces.

The non-volatile memory 140 may be embodied as any type of data storage capable of storing data in a persistent manner, even if power is interrupted to non-volatile memory 140. For example, in the illustrative embodiment, the non-volatile memory 140 is embodied as one or more non-volatile memory devices 142. The non-volatile memory devices 142 are illustratively embodied as byte or block-addressable, write-in-place non-volatile memory devices. In some embodiments, the non-volatile memory devices 142 may be arranged in ranks. It should be appreciated that the non-volatile memory devices 142 in each rank are connected to the same communication channel.

Each non-volatile memory device 142 may be embodied as a block addressable memory device, such as those based on NAND or NOR technologies. A non-volatile memory device 142 may also include future generation nonvolatile devices, such as a three dimensional crosspoint memory device, or other byte addressable write-in-place nonvolatile memory devices. In one embodiment, a non-volatile memory device 142 may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thiristor based memory device, or a combination of any of the above, or other memory. The memory device may refer to the die itself and/or to a packaged memory product. In some embodiments, 3D crosspoint memory may comprise a transistor-less stackable cross point architecture in which memory cells sit at the intersection of word lines and bit lines and are individually addressable and in which bit storage is based on a change in bulk resistance.

The data storage device 108 may be embodied as any type of device or devices configured for short-term or long-term storage of data such as, for example, memory devices and circuits, memory cards, hard disk drives, solid-state drives, or other data storage devices. The data storage device 108 may be incorporated in, or form a portion of, one or more other components of the computing device 100. For example, the data storage device 108 may be embodied as, or otherwise be included in, the main memory 104. Additionally or alternatively, the data storage device 108 may be embodied as, or otherwise included in, a solid state drive of the computing device 100. Further, in some embodiments, the data storage device 108 may be embodied as, or otherwise included in, a hard disk drive of the computing device 100. Of course, in other embodiments, the data storage device 108 may be included in or form a portion of other components of the computing device 100.

The peripheral devices 110 may include any number of input/output devices, user interface devices, and/or externally connected peripheral devices. For example, in some embodiments, the peripheral devices 110 may include a display, touch screen, graphics circuitry, keypad, keyboard, mouse, speaker system, and/or other input/output devices, interface devices, and/or peripheral devices. Additionally or alternatively, the peripheral devices 110 may include one or more ports, such as a USB port, for example, for connecting external peripheral devices to the computing device 100.

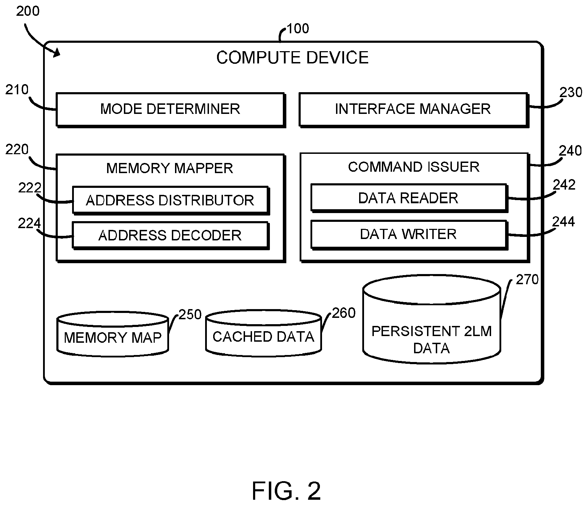

Referring now to FIG. 2, in use, the compute device 100 may establish an environment 200. The illustrative environment 200 includes a mode determiner 210, a memory mapper 220, an interface manager 230, and a command issuer 240. The memory mapper 220 further includes an address distributor 222 and an address decoder 224. Further, the command issuer 240 includes a data reader 242 and a data writer 244. Additionally, the illustrative environment 200 includes a memory map 250, cached data 260, and persistent 2LM data 270. Each of the components of the environment 200 may be embodied as firmware, software, hardware, or a combination thereof. For example the logic and other components of the environment 200 may form a portion of, or otherwise be established by, the compute device 100 or other hardware components of the compute device 100. As such, in some embodiments, any one or more of the components of the environment 200 may be embodied as a circuit or collection of electrical devices (e.g., a memory mode determiner circuit 210, a memory mapper circuit 220, an interface manager circuit 230, a command issuer circuit 240, etc.).

The mode determiner 210, which may be embodied as hardware, firmware, software, virtualized hardware, emulated architecture, and/or a combination thereof as described above, is configured to determine different configurable modes of operation for memory addresses within a memory address space. As described above, the memory address space includes a set of logical addresses that correspond to physical addresses in the volatile memory 130 and/or the non-volatile memory 140. By configuring modes of operation for each logical memory address or ranges thereof, the mode determiner 210 may control memory access to one or more of the volatile and non-volatile memory devices 132, 142. For example, in the illustrative embodiment, the modes of operation include a caching mode, a non-caching memory mode, and the persistent 2LM mode, resulting in different types of memory address spaces within a main memory address space presented to the operating system and other software, including a volatile memory address space, a non-volatile memory address space, and a persistent memory address space. Typically, the volatile memory address space is configured to operate in the caching mode, the non-volatile memory address space is configured to operate in the non-caching memory mode, and the persistent memory address space is generally configured to operate in the non-caching memory mode. However, in the illustrative embodiment, the persistent memory address space is configured to operate in the persistent 2LM mode, which is described in detail below. It should be appreciated that, other embodiments may provide other modes of operation resulting in other types of memory address spaces within the main memory address space.

In use, when the internal memory controller 120 receives a data instruction (e.g., write or read) from the application 122 that is mapped to a memory address space, the internal memory controller 120 may determine which memory (i.e., volatile memory 130 or non-volatile memory 140) to access for executing the data instruction based on the mode of operation for the memory address space. For example, if the memory address of the requested data instruction is mapped to the volatile memory address space operable in the caching mode, the requested data instruction is directed to the volatile memory 130 for execution. If, however, the memory address of the requested data instruction is mapped to the non-volatile memory address space operable in the non-caching memory mode, the requested data instruction bypasses the volatile memory 130 and is directed to the non-volatile memory 140 for execution. Alternatively, if the memory address of the requested data instruction is mapped to the persistent memory address space operable in the persistent 2LM mode, the requested data instruction is directed to the volatile memory 130 and/or the non-volatile memory 140 for execution, as described in detail below.

The memory mapper 220, which may be embodied as hardware, firmware, software, virtualized hardware, emulated architecture, and/or a combination thereof as described above, is configured to generate a memory map 250 that includes memory address spaces within a main memory address space and corresponding modes of operation. As described below, in the illustrative embodiment, the memory map 250 is used to determine whether an application data instruction received from an application requires the application data to be persistent after execution. For example, the memory map 250 may indicate whether a memory address that an application data instruction is mapped to is configured to operate in the caching mode, the non-caching memory mode, or the persistent 2LM mode. To do so, the memory mapper 220 includes the address distributor 222 and the address decoder 224.

The address distributor 222, in the illustrative embodiment, is configured to set up an address interleave to map contiguous logical memory addresses to physical addresses that are distributed across multiple memory devices (e.g., multiple volatile memory devices 132 or multiple non-volatile memory devices 142). For example, a first logical memory address may map to a first physical memory address in one of the volatile memory devices 132 and the second logical memory address may map to a second physical memory address in a second of the volatile memory devices 132, and so on.

The address decoder 224 is configured to alter a memory mode of the memory address space to a different memory mode, such that the operating system can use the memory address space that is configured to operate in one memory mode as another memory mode without implementing any changes to hardware components of the compute device 100. For example, in the illustrative embodiment, the address decoder 224 allows the processor 102 and software to use the memory address space that is configured to operate in the persistent 2LM mode as the cached volatile memory such that memory accesses are cached in the persistent memory address space in the volatile memory 130.

In use, when the internal memory controller 120 receives a data request from the application 122, the memory mapper 220 determines a memory address space that the application data instruction is mapped to, and further determines which memory mode corresponds to the determined memory address space. For example, if the memory mapper 220 determines that a logical address associated with a requested data instruction is mapped to a memory address space that is configured to operate in the caching mode, the internal memory controller 120 forwards the requested data instruction to the volatile memory controller 134 to access the corresponding physical address of the volatile memory 130 to perform the requested data instruction (i.e., write data to or read data from the volatile memory 130) for execution.

If, however, the memory mapper 220 determines that the requested data instruction is mapped to a memory address space that is configured to operate in the non-caching memory mode, the internal memory controller 120 forwards the requested data instruction to the non-volatile memory controller 144 to access the corresponding physical memory address of the non-volatile memory 140 to perform the requested data instruction (i.e., write data to or read data from the non-volatile memory 140).

Alternatively, if the memory mapper 220 determines that the requested data instruction is mapped to a memory address space that is configured to operate in the persistent 2LM mode, the internal memory controller 120 may forward the requested data instruction to the non-volatile memory controller 144 and the volatile memory controller 134. As such, the requested data instruction may be executed in the volatile and non-volatile memory 130, 140 (i.e., write persistent data to or read persistent data from the volatile and non-volatile memory 130, 140), which is described in detail below.

The interface manager 230 is configured to handle various instructions, including but not limited to, data storage instructions and data read instructions received from a host, which may be embodied as an application, service, and/or other device. In some embodiments, the interface manager 230 may be configured to handle other instructions as well, including self-monitoring, analysis and reporting technology ("SMART") instructions, and other instructions defined in the non-volatile memory express ("NVMe") specification. NVMe is a logical device interface for accessing non-volatile storage media attached via a Peripheral Component Interconnect Express (PCIe) bus. The non-volatile storage media may comprise a flash memory and solid solid-state drives (SSDs). It should be appreciated that NVMe is designed for accessing low latency storage devices in computer systems, including personal and enterprise computer systems, and is also deployed in data centers requiring scaling of thousands of low latency storage devices. To handle the various instructions, the interface manager 230 is configured to identify a received instruction and any data and/or parameters associated with the instruction, and transmit those items to the mode determiner 210. For example, in response to a read instruction, the interface manager 230 transmits the data read by the data manager 230 to the host.

The command issuer 240, which may be embodied as hardware, firmware, software, virtualized hardware, emulated architecture, and/or a combination thereof, is configured to manage the reading of data from and writing of data to the volatile memory devices 132 of the volatile memory 130 and/or the non-volatile memory devices 142 of the non-volatile memory 140. To do so, the command issuer 240 includes the data reader 242 and the data writer 244.

The data reader 242 is configured to read data from a volatile memory device(s) 132 and/or a non-volatile memory device(s) 142 in response to an application read instruction. As described above, whether to access the volatile memory 130 or the non-volatile memory 140 depends on the memory address of the requested application read instruction.

The data writer 244 is configured to write data to a volatile memory device(s) 132 and/or a non-volatile memory device(s) 142 in response to an application write instruction. As described above, whether to access the volatile memory 130 or the non-volatile memory 140 depends on the memory address of the requested application write instruction.

Additionally, the illustrative environment 200 includes memory map data 250, cached data 260, and persistent 2LM data 270. The memory map data 250 may be embodied as any data indicative of one or more memory maps that include memory address space(s) and corresponding mode(s) of operation. The memory map 250 may be accessed by the modules and/or sub-modules of the compute device 100.

The cached data 260 may be embodied as any cached data that resulted from execution of an application data instruction and stored in the volatile memory 130. For example, as described above, the application data instruction, which is mapped to a memory address space that is operable in the caching mode and/or the persistent 2LM mode, is executed and cached in the volatile memory 130.

The persistent 2LM data 270 may be embodied as any data that resulted from execution of a persistent 2LM data instruction and stored in the non-volatile memory 140 upon execution. For example, as described above, the application data instruction, which is mapped to a memory address space that is operable in the persistent 2LM mode, is executed and stored in the non-volatile memory 140.

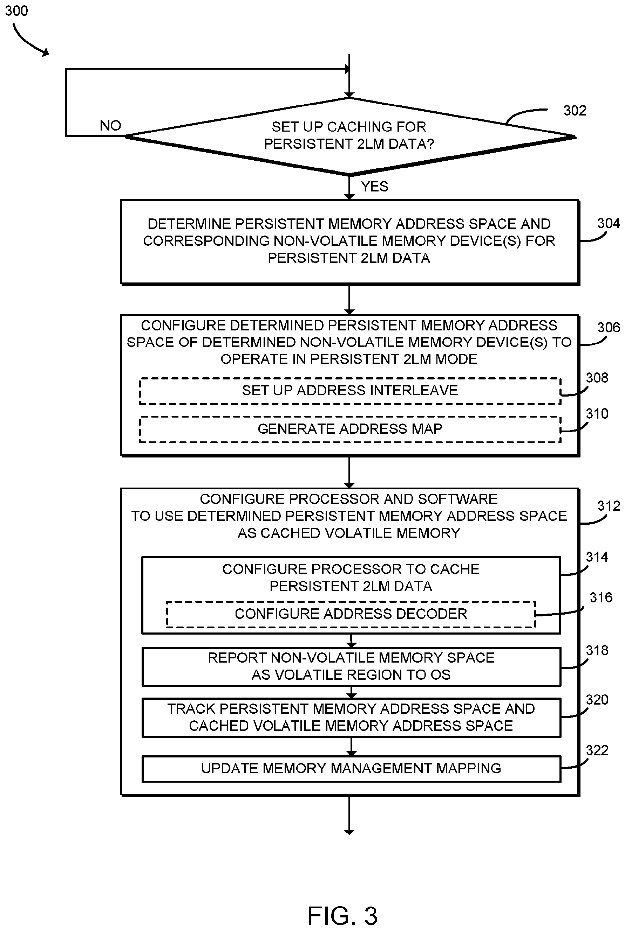

Referring now to FIG. 3, in use, the processor 102 may execute a method 300 for configuring an operating system executed by the compute device 100 to cache accesses to the persistent memory address space in the volatile memory 130. The method 300 begins at block 302 in which the processor 102 determines whether to set up caching for application data that is to be persistent by configuring a mode of operation for the corresponding memory address space. In some embodiments, the processor 102 determines whether to set up caching for persistent 2LM data based on a type of an application and/or a type of application data. If the processor 102 determines not to set up caching for persistent 2LM data, the method 300 loops back to block 302 to continue determining whether to set up caching for persistent 2LM data.

If, however, the processor 102 determines to set up caching for persistent 2LM data, the method 300 advances to block 304. In block 304, the processor 102 determines a persistent memory address space within the non-volatile memory address space for storage of persistent data and further determines one or more corresponding non-volatile memory devices that are configured to contain the persistent memory address space. In other words, the processor 102 determines one or more non-volatile memory devices that are configured to contain persistent 2LM data.

In block 306, the processor 102 configures the determined persistent memory address space of the determined non-volatile memory device(s) to operate in a persistent 2LM mode. In some embodiments, the processor 102 may set up an address interleave to allocate memory addresses of the memory address space across multiple non-volatile memory devices 142 in block 308. Alternatively, the processor 102 may update an existing address interleave to further allocate memory addresses of the persistent memory address space across multiple non-volatile memory devices 142.

Additionally or alternatively, in some embodiments, in block 310, the processor 102 may generate an address map that includes memory addresses and a corresponding mode of operation for each memory address. Alternatively, the processor 102 may update an existing address map to update those memory addresses that are now configured to operate in the persistent 2LM mode. For example, as described above, the address map may indicate whether a memory address included in the application data instruction is configured to operate in the caching mode, the non-caching memory mode, or the persistent 2LM mode. As described above, an application data instruction that includes a memory address that is mapped to the non-volatile memory address space is generally directed to the non-volatile memory 140 for execution and persistent storage. On the other hand, an application data instruction that includes a memory address that is mapped to the persistent memory address space is directed to both the non-volatile memory 140 for persistent storage and the volatile memory 130 for caching the persistent 2LM data.

Additionally or alternatively, in some embodiments, the processor 102 may set up at least one block window that defines at least one address range for accessing one or more blocks of the persistent 2LM data storable within the non-volatile memory device(s) 142.

In block 312, the processor 102 and software are configured to cache accesses to the persistent memory address space in the volatile memory 130. In other words, the processor 102 is configured to cache the persistent 2LM data in volatile memory 130, while treating the persistent 2LM data pursuant to the persistent 2LM mode in non-volatile memory 140. To do so, in block 314, the processor 102 is configured to cache the persistent 2LM data in the volatile memory 130. In some embodiments, in block 316, the internal memory controller 102 of the processor 102 may configure one or more address decoders to change the mode of operation of the memory address. For example, the address decoder may convert the persistent 2LM mode of the persistent memory address space to the caching memory mode.

In block 318, the processor 102 further reports the persistent memory address space as a volatile region to the operating system, such that the application instruction mapped to the persistent memory address space is executed and the corresponding data is cached in the volatile memory 130.

In block 320, the processor 102 tracks the persistent memory address space and cached volatile memory address space. The processor 102 is configured to generate a memory management mapping of the persistent memory address space and the volatile memory address space to keep track of the persistent 2LM data. In block 322, the processor 102 updates the memory management mapping.

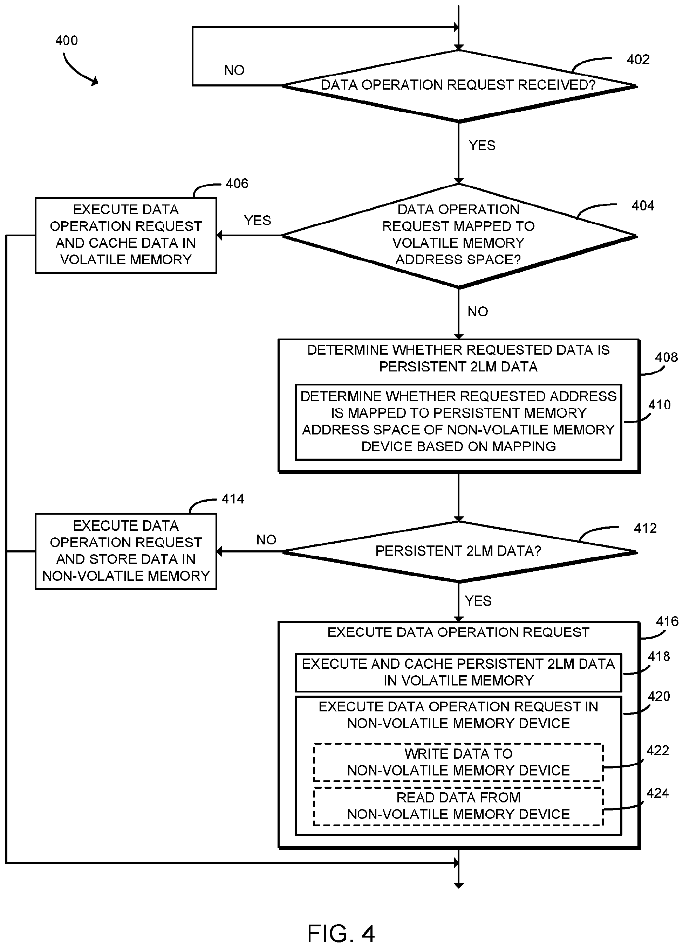

Referring now to FIG. 4, in use, the processor 102 of the compute device 100 may execute a method 400 for executing a persistent 2LM data instruction. The method 400 begins at block 402 in which the processor 102 determines whether a data operation request has been received. If the processor 102 determines that a data operation request has not been received, the method 400 loops back to block 402 to continue monitoring for an application data operation request. If, however, the processor 102 determines that the data operation request has been received, the method 400 advances to block 404.

In block 404, the internal memory controller 120 determines whether the memory address of the received data operation request is mapped to the volatile memory address space. If the processor 102 determines that the data operation request is mapped to the volatile memory address space, the method 400 advances to block 406 in which the processor 102 performs the data operation request and caches the requested data in the corresponding volatile memory device 132 of the volatile memory 130 based on the address map.

If, however, if the processor 102 determines that the data operation request is not mapped to the volatile memory address space, the method 400 advances to block 408. In block 408, the processor 102 determines whether the requested data is persistent 2LM data. To do so, in block 410, the processor 102 determines whether the memory address of the requested data is mapped to a persistent memory address space of the non-volatile memory device 142 based on the address map.

If the processor 102 determines that the requested data is not persistent 2LM data in block 412 (e.g., the memory address of the requested data is not mapped to the persistent memory address space), the method 400 advances to block 414. In block 414, the processor 102 executes the data operation request and stores the requested data in the corresponding non-volatile memory device 142 of the non-volatile memory 140.

If, however, the processor 102 determines that the requested data is persistent 2LM data in block 412, the method 400 advances to block 416. In block 416, the processor 102 executes the received data operation request. To do so, in block 418, the internal memory controller 120 of the processor 102 directs the data operation request to the volatile memory controller 134 to execute the data operation request and cache the persistent 2LM data in the corresponding volatile memory device 132 of the volatile memory 130.

Additionally, in block 420, the internal memory controller 120 of the processor 102 directs the data operation request to the non-volatile memory controller 144 to execute the data operation request and store the persistent 2LM data in the corresponding non-volatile memory device 142 of the non-volatile memory 140. For example, in block 422, the non-volatile memory controller 144 may write persistent 2LM data that was cached in the volatile memory 130 to the corresponding address of the non-volatile memory device 142 of the non-volatile memory 140 in response to a receipt a write data instruction from an application.

Alternatively, in block 422, the non-volatile memory controller 144 may read persistent 2LM data from the corresponding address of the non-volatile memory device 142 of the non-volatile memory 140 in response to a receipt a read data instruction from an application.

In some embodiments, the persistent 2LM data stored in the volatile memory 130 may be written to the non-volatile memory 140 in case of an overflow of the volatile memory 130. In other embodiments, the requested persistent 2LM data may be read from the non-volatile memory 140 if the persistent 2LM data is not found in the volatile memory 130.

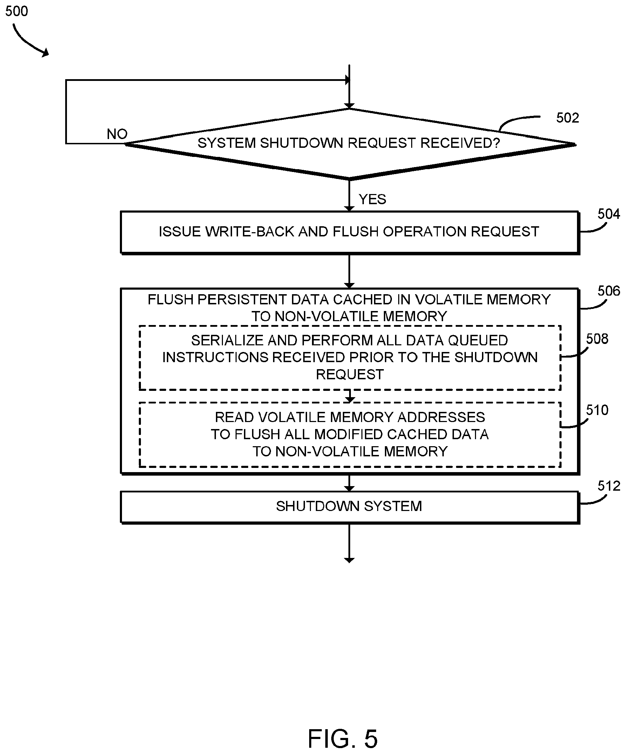

In some embodiments, the persistent 2LM data may be committed to the non-volatile memory 140 from the volatile memory 130 in response to a receipt of a shutdown signal, which is described in detail in FIG. 5. Additionally or alternatively, the persistent 2LM data may be periodically committed to the non-volatile memory 140 from the volatile memory 130.

Referring now to FIG. 5, in use, the processor 102 of the compute device 100 may execute a method 500 for flushing the persistent 2LM data 270 cached in the volatile memory 130 to the non-volatile memory 140. The method 500 begins at block 502 in which the processor 102 determines whether a system shutdown request has been received. If the processor 102 determines that a system shutdown request has not been received, the method 500 loops back to block 502 to continue monitoring for a system shutdown request. If, however, the processor 102 determines that the system shutdown request has been received, the method 500 advances to block 504.

In block 504, the processor 102 issues a write-back and flush operation request prior to shutting down the system. In block 506, in response to a receipt of the write-back and flush operation request, the processor 102 flushes the persistent 2LM data 270 stored in the volatile memory 130 to the non-volatile memory 140. To do so, in some embodiments, the processor 102 may serialize and perform any and all data queued instructions received prior to the shut down request, as indicated in block 508. Once the instructions in the queue are drained, the processor 102 may read the volatile memory addresses to flush all modified cached data of the persistent memory address space to the non-volatile memory 140 in block 510. Once the persistent 2LM data 270 cached in the volatile memory 130 is stored in the non-volatile memory 140, the method 500 advances to block 512 to shut down the system.

Reference to memory devices can apply to different memory types, and in particular, any memory that has a bank group architecture. Memory devices generally refer to volatile memory technologies. Volatile memory is memory whose state (and therefore the data stored on it) is indeterminate if power is interrupted to the device. Nonvolatile memory refers to memory whose state is determinate even if power is interrupted to the device. Dynamic volatile memory requires refreshing the data stored in the device to maintain state. One example of dynamic volatile memory includes DRAM (dynamic random access memory), or some variant such as synchronous DRAM (SDRAM). A memory subsystem as described herein may be compatible with a number of memory technologies, such as DDR4 (DDR version 4, initial specification published in September 2012 by JEDEC), DDR4E (in development by JEDEC), LPDDR4 (LOW POWER DOUBLE DATA RATE (LPDDR) version 4, JESD209-4, originally published by JEDEC in August 2014), WIO2 (Wide I/O 2 (WideIO2), JESD229-2, originally published by JEDEC in August 2014), HBM (HIGH BANDWIDTH MEMORY DRAM, JESD235, originally published by JEDEC in October 2013), DDR5 (DDR version 5, currently in discussion by JEDEC), LPDDR5 (currently in discussion by JEDEC), HBM2 (HBM version 2), currently in discussion by JEDEC), and/or others, and technologies based on derivatives or extensions of such specifications.

In addition to, or alternatively to, volatile memory, in one embodiment, reference to memory devices can refer to a nonvolatile memory device whose state is determinate even if power is interrupted to the device.

## Claims

1. A compute device (100) for caching data in a two-level memory, 2LM, comprising:
a memory (104) including: a volatile memory (130) comprising one or more volatile memory devices (132); and a non-volatile memory (140) comprising one or more non-volatile memory devices (142); and
a processor (102) configured to:
determine (304) a persistent memory address space for persistent 2LM data (270) and one or more non-volatile memory devices that the persistent memory address space is mapped to, wherein each non-volatile memory device contains the persistent 2LM data;
configure (306) the persistent memory address space to operate in a first mode of operation, wherein the first mode of operation is a persistent two-level memory, 2LM, mode for storing the persistent 2LM data in the non-volatile memory, in which application data written to the persistent memory address space is reusable across power cycles; and
configure an operating system to cache accesses to the persistent memory address space in the volatile memory, **characterised in that** to configure the operating system comprises:
allowing the operating system to use the persistent memory address space as a cached volatile memory operable in a second mode of operation, wherein the second mode of operation is a caching mode for caching the persistent 2LM data in the volatile memory, and
converting from the first mode of operation for the persistent memory address space to the second mode of operation for the persistent memory address space.

2. The compute device of claim 1, wherein the processor is further to:
receive a write data instruction to write application data;
determine whether the write data instruction requires the application data to be persistent;
execute, in response to a determination that the application data is persistent, the write data instruction to a memory address of the write data instruction;
cache the persistent 2LM data in a corresponding volatile memory; and
store the persistent 2LM data in a corresponding non-volatile memory device.

3. The compute device of claim 2, wherein to determine whether the application data is required to be persistent comprises to determine whether the memory address of the write data instruction is mapped to a persistent memory address space that is configured to operate in the persistent 2LM mode.

4. The compute device of claim 2, wherein to store the application data in the non-volatile memory device comprises to store application data that is modified and cached in the volatile memory device to the non-volatile memory device.

5. The compute device of claim 1 wherein the processor is further to:
receive a read data instruction to read application data;
determine whether the read data instruction requires the application data to be persistent;
execute, in response to a determination that the application data is required to be persistent, the read data instruction to a memory address of the read data instruction; and
cache the application data in a corresponding volatile memory device.

6. The compute device of claim 1, wherein the processor is further to detect a system shut down request, and write, in response to the detection of the system shut down request, application data from the one or more volatile memory devices to the one or more non-volatile memory devices.

7. A method for caching persistent data in a two-level memory, 2LM, comprising:
determining (304), by a compute device (100), a persistent memory address space for persistent 2LM data (270) and one or more non-volatile memory devices (132) that the persistent memory address space is mapped to, wherein each non-volatile memory device contains the persistent 2LM data;
configuring (306), by the compute device, the persistent memory address space to operate in a first mode of operation, wherein the first mode of operation is a persistent two-level memory, 2LM, mode for storing the persistent 2LM data in a non-volatile memory in which application data written to the persistent memory address space is reusable across power cycles; and
configuring, by the compute device, an operating system to cache accesses to the persistent memory address space in a volatile memory (140), **characterised in that** configuring the operating system comprises:
allowing the operating system to use the persistent memory address space as a volatile memory address space operable in a second mode of operation, wherein the second mode of operation is a caching mode for caching the persistent 2LM data in the volatile memory; and
converting from the first mode of operation for the persistent memory address space to the second mode of operation for the persistent memory address space.

8. The method of claim 7 further comprising:
receiving, by the compute device, a write data instruction to write application data;
determining, by the compute device, whether the write data instruction requires the application data to be persistent;
executing, by the compute device and in response to a determination that the application data is persistent, the write data instruction to a memory address of the write data instruction;
caching, by the compute device, the persistent 2LM data in a corresponding volatile memory; and
storing, by the compute device, the persistent 2LM data in a corresponding non-volatile memory device.

9. The method of claim 8, wherein determining whether the application data is required to be persistent comprises determining whether the memory address of the write data instruction is mapped to a persistent memory address space that is configured to operate in the persistent 2LM mode.

10. The method of claim 7 further comprising:
receiving, by the compute device, a read data instruction to read application data;
determining, by the compute device, whether the read data instruction requires the application data to be persistent;
executing, by the compute device and in response to a determination that the application data is required to be persistent, the read data instruction to a memory address of the read data instruction; and
caching, by the compute device, the application data in a corresponding volatile memory device.

11. One or more machine-readable storage media comprising a plurality of instructions stored thereon that, when executed by the compute device of claim 1, cause the compute device to perform the method of any of claims 7-10.

## Patentansprüche

1. Rechenvorrichtung (100) zum Cachen von Daten in einem Zweistufenspeicher, 2LM (en: two-level memory), die aufweist:
einen Speicher (104), der umfasst: einen flüchtigen Speicher (130), der eine oder mehrere flüchtige Speichervorrichtungen (132) aufweist; und einen nichtflüchtigen Speicher (140), der eine oder mehrere nichtflüchtige Speichervorrichtungen (142) aufweist; und
einen Prozessor (102), der dazu ausgebildet ist:
einen persistenten Speicheradressraum für persistente 2LM-Daten (270) und eine oder mehrere nichtflüchtige Speichervorrichtungen, auf die der persistente Speicheradressraum abgebildet wird, zu bestimmen (304), wobei jede nichtflüchtige Speichervorrichtung die persistenten 2LM-Daten enthält;
den persistenten Speicheradressraum dafür zu konfigurieren (306), in einem ersten Betriebsmodus zu arbeiten, wobei der erste Betriebsmodus ein Modus persistenten Zweistufenspeichers, 2LM, zum Speichern der persistenten 2LM-Daten in dem nichtflüchtigen Speicher ist, in dem Anwendungsdaten, die auf den persistenten Speicheradressraum geschrieben sind, über Einschaltzyklen hinweg wiederverwendbar sind; und
ein Betriebssystem dafür zu konfigurieren, Zugriffe auf den persistenten Speicheradressraum in dem flüchtigen Speicher zu cachen, **dadurch gekennzeichnet, dass** das Betriebssystem zu konfigurieren umfasst:
das Ermöglichen, dass das Betriebssystem den persistenten Speicheradressraum als einen gecachten flüchtigen Speicher verwendet, der in einem zweiten Betriebsmodus betreibbar ist, wobei der zweite Betriebsmodus ein Caching-Modus zum Cachen der persistenten 2LM-Daten in dem flüchtigen Speicher ist, und
das Konvertieren von dem ersten Betriebsmodus für den persistenten Speicheradressraum in den zweiten Betriebsmodus für den persistenten Speicheradressraum.

2. Rechenvorrichtung nach Anspruch 1, wobei der Prozessor ferner dafür vorgesehen ist:
eine Schreibdatenanweisung zu empfangen, um Anwendungsdaten zu schreiben;
zu bestimmen, ob die Schreibdatenanweisung erfordert, dass die Anwendungsdaten persistent sind;
als Reaktion auf eine Bestimmung, dass die Anwendungsdaten persistent sind, die Schreibdatenanweisung auf eine Speicheradresse der Schreibdatenanweisung auszuführen;
die persistenten 2LM-Daten in einem entsprechenden flüchtigen Speicher zu cachen; und
die persistenten 2LM-Daten in einer entsprechenden nichtflüchtigen Speichervorrichtung zu speichern.

3. Rechenvorrichtung nach Anspruch 2, wobei zu bestimmen, ob es erforderlich ist, dass die Anwendungsdaten persistent sind, umfasst, zu bestimmen, ob die Speicheradresse der Schreibdatenanweisung auf einen persistenten Speicheradressraum abgebildet wird, der dafür konfiguriert ist, in dem persistenten 2LM-Modus zu arbeiten.

4. Rechenvorrichtung nach Anspruch 2, wobei die Anwendungsdaten in der nichtflüchtigen Speichervorrichtung zu speichern umfasst, Anwendungsdaten, die modifiziert und in der flüchtigen Speichervorrichtung gecacht sind, auf die nichtflüchtige Speichervorrichtung zu speichern.

5. Rechenvorrichtung nach Anspruch 1, wobei der Prozessor ferner dafür vorgesehen ist:
eine Lesedatenanweisung zu empfangen, um Anwendungsdaten zu lesen;
zu bestimmen, ob die Lesedatenanweisung erfordert, dass die Anwendungsdaten persistent sind;
als Reaktion auf eine Bestimmung, dass es erforderlich ist, dass die Anwendungsdaten persistent sind, die Lesedatenanweisung auf eine Speicheradresse der Lesedatenanweisung auszuführen; und
die Anwendungsdaten in einer entsprechenden flüchtigen Speichervorrichtung zu cachen.

6. Rechenvorrichtung nach Anspruch 1, wobei der Prozessor ferner dafür vorgesehen ist, eine Systemabschaltanfrage zu erfassen und als Reaktion auf die Erfassung der Systemabschaltanfrage Anwendungsdaten von der einen oder den mehreren flüchtigen Speichervorrichtungen auf die eine oder die mehreren nichtflüchtigen Speichervorrichtungen zu schreiben.

7. Verfahren zum Cachen persistenter Daten in einem Zweistufenspeicher, 2LM, das umfasst:
das Bestimmen (304) eines persistenten Speicheradressraums für persistente 2LM-Daten (270) und einer oder mehrerer nichtflüchtiger Speichervorrichtungen (132), auf die der persistente Speicheradressraum abgebildet wird, durch eine Rechenvorrichtung (100), wobei jede nichtflüchtige Speichervorrichtung die persistenten 2LM-Daten enthält;
das Konfigurieren (306) des persistenten Speicheradressraums durch die Rechenvorrichtung dafür, in einem ersten Betriebsmodus zu arbeiten, wobei der erste Betriebsmodus ein Modus persistenten Zweistufenspeichers, 2LM, zum Speichern der persistenten 2LM-Daten in einem nichtflüchtigen Speicher ist, in dem Anwendungsdaten, die auf den persistenten Speicheradressraum geschrieben sind, über Einschaltzyklen hinweg wiederverwendbar sind; und
das Konfigurieren eines Betriebssystems durch die Rechenvorrichtung dafür, Zugriffe auf den persistenten Speicheradressraum in einem flüchtigen Speicher (140) zu cachen, **dadurch gekennzeichnet, dass** das Konfigurieren des Betriebssystems umfasst:
das Ermöglichen, dass das Betriebssystem den persistenten Speicheradressraum als einen flüchtigen Speicheradressraum verwendet, der in einem zweiten Betriebsmodus betreibbar ist, wobei der zweite Betriebsmodus ein Caching-Modus zum Cachen der persistenten 2LM-Daten in dem flüchtigen Speicher ist; und
das Konvertieren von dem ersten Betriebsmodus für den persistenten Speicheradressraum in den zweiten Betriebsmodus für den persistenten Speicheradressraum.

8. Verfahren nach Anspruch 7, das ferner umfasst:
das Empfangen einer Schreibdatenanweisung durch die Rechenvorrichtung, um Anwendungsdaten zu schreiben;
das Bestimmen durch die Rechenvorrichtung, ob die Schreibdatenanweisung erfordert, dass die Anwendungsdaten persistent sind;
das Ausführen der Schreibdatenanweisung auf eine Speicheradresse der Schreibdatenanweisung durch die Rechenvorrichtung und als Reaktion auf eine Bestimmung, dass die Anwendungsdaten persistent sind;
das Cachen der persistenten 2LM-Daten in einem entsprechenden flüchtigen Speicher durch die Rechenvorrichtung; und
das Speichern der persistenten 2LM-Daten in einer entsprechenden nichtflüchtigen Speichervorrichtung durch die Rechenvorrichtung.

9. Verfahren nach Anspruch 8, wobei das Bestimmen, ob es erforderlich ist, dass die Anwendungsdaten persistent sind, das Bestimmen umfasst, ob die Speicheradresse der Schreibdatenanweisung auf einen persistenten Speicheradressraum abgebildet wird, der dafür konfiguriert ist, in dem persistenten 2LM-Modus zu arbeiten.

10. Verfahren nach Anspruch 7, das ferner umfasst:
das Empfangen einer Lesedatenanweisung durch die Rechenvorrichtung, um Anwendungsdaten zu lesen;
das Bestimmen durch die Rechenvorrichtung, ob die Lesedatenanweisung erfordert, dass die Anwendungsdaten persistent sind;
das Ausführen der Lesedatenanweisung auf eine Speicheradresse der Lesedatenanweisung durch die Rechenvorrichtung und als Reaktion auf eine Bestimmung, dass es erforderlich ist, dass die Anwendungsdaten persistent sind; und
das Cachen der Anwendungsdaten in einer entsprechenden flüchtigen Speichervorrichtung durch die Rechenvorrichtung.

11. Ein oder mehrere maschinenlesbare Speichermedien, die eine Mehrzahl von darauf gespeicherten Anweisungen aufweisen, die bei Ausführung durch die Rechenvorrichtung nach Anspruch 1 bewirken, dass die Rechenvorrichtung das Verfahren nach einem der Ansprüche 7-10 durchführt.

## Revendications

1. Dispositif informatique (100) pour la mise en mémoire cache de données dans une mémoire à deux niveaux, 2LM, comprenant :
une mémoire (104) comportant : une mémoire volatile (130) comprenant un ou plusieurs dispositifs de mémoire volatile (132) ; et une mémoire non volatile (140) comprenant un ou plusieurs dispositifs de mémoire non volatile (142) ; et
un processeur (102) configuré pour :
déterminer (304) un espace d'adresses mémoire persistant pour des données 2LM persistantes (270) et un ou plusieurs dispositifs de mémoire non volatile sur lesquels est mappé l'espace d'adresses mémoire persistant, chaque dispositif de mémoire non volatile contenant les données 2LM persistantes ;
configurer (306) l'espace d'adresses mémoire persistant pour fonctionner dans un premier mode de fonctionnement, le premier mode de fonctionnement étant un mode de mémoire à deux niveaux, 2LM, persistant pour mémoriser les données 2LM persistantes dans la mémoire non volatile, des données d'application écrites dans l'espace d'adresses mémoire persistant étant réutilisables durant des cycles d'alimentation ; et
configurer un système d'exploitation pour mettre en cache des accès à l'espace d'adresses mémoire persistant dans la mémoire volatile, **caractérisé en ce que** la configuration du système d'exploitation comprend :
l'autorisation au système d'exploitation d'utiliser l'espace d'adresses mémoire persistant en tant que mémoire volatile mise en cache exploitable dans un second mode de fonctionnement, le second mode de fonctionnement étant un mode de mise en cache pour mettre en cache les données 2LM persistantes dans la mémoire volatile, et
la conversion du premier mode de fonctionnement pour l'espace d'adresses mémoire persistant en le second mode de fonctionnement pour l'espace d'adresses mémoire persistant.

2. Dispositif informatique selon la revendication 1, dans lequel le processeur est destiné en outre à :
recevoir une instruction d'écriture de données pour écrire des données d'application ;
déterminer que l'instruction d'écriture de données nécessite que les données d'application soient persistantes ou non ;
exécuter, en réponse à une détermination que les données d'application sont persistantes, l'instruction d'écriture de données dans une adresse mémoire de l'instruction d'écriture de données ;
mettre en cache les données 2LM persistantes dans une mémoire volatile correspondante ; et
mémoriser les données 2LM persistantes dans un dispositif de mémoire non volatile correspondant.

3. Dispositif informatique selon la revendication 2, dans lequel la détermination que les données d'application doivent être persistantes ou non comprend la détermination que l'adresse mémoire de l'instruction d'écriture de données est mappée ou non sur un espace d'adresses mémoire persistant qui est configuré pour fonctionner dans le mode 2LM persistant.

4. Dispositif informatique selon la revendication 2, dans lequel la mémorisation des données d'application dans le dispositif de mémoire non volatile comprend la mémorisation de données d'application qui sont modifiées et mises en cache au niveau du dispositif de mémoire volatile dans le dispositif de mémoire non volatile.

5. Dispositif informatique selon la revendication 1 dans lequel le processeur est destiné en outre à :
recevoir une instruction de lecture de données pour lire des données d'application ;
déterminer que l'instruction de lecture de données nécessite que les données d'application soient persistantes ou non ;
exécuter, en réponse à une détermination que les données d'application doivent être persistantes, l'instruction de lecture de données dans une adresse mémoire de l'instruction de lecture de données ; et
mettre en cache les données d'application dans un dispositif de mémoire volatile correspondant.

6. Dispositif informatique selon la revendication 1, dans lequel le processeur est destiné en outre à détecter une demande d'arrêt de système, et écrire, en réponse à la détection de la demande d'arrêt de système, des données d'application des un ou plusieurs dispositifs de mémoire volatile dans les un ou plusieurs dispositifs de mémoire non volatile.

7. Procédé de mise en cache de données persistantes dans une mémoire à deux niveaux, 2LM, comprenant :
la détermination (304), par un dispositif informatique (100), d'un espace d'adresses mémoire persistant pour des données 2LM persistantes (270) et d'un ou plusieurs dispositifs de mémoire non volatile (132) sur lesquels est mappé l'espace d'adresses mémoire persistant, chaque dispositif de mémoire non volatile contenant les données 2LM persistantes ;
la configuration (306), par le dispositif informatique, de l'espace d'adresses mémoire persistant pour fonctionner dans un premier mode de fonctionnement, le premier mode de fonctionnement étant un mode de mémoire à deux niveaux, 2LM, persistant pour mémoriser les données 2LM persistantes dans une mémoire non volatile, des données d'application écrites dans l'espace d'adresses mémoire persistant étant réutilisables durant des cycles d'alimentation ; et
la configuration, par le dispositif informatique, d'un système d'exploitation pour mettre en cache des accès à l'espace d'adresses mémoire persistant dans une mémoire volatile (140), **caractérisé en ce que** la configuration du système d'exploitation comprend :
l'autorisation au système d'exploitation d'utiliser l'espace d'adresses mémoire persistant en tant qu'espace d'adresses mémoire volatile exploitable dans un second mode de fonctionnement, le second mode de fonctionnement étant un mode de mise en cache pour mettre en cache les données 2LM persistantes dans la mémoire volatile, et
la conversion du premier mode de fonctionnement pour l'espace d'adresses mémoire persistant en le second mode de fonctionnement pour l'espace d'adresses mémoire persistant.

8. Procédé selon la revendication 7 comprenant en outre :
la réception, par le dispositif informatique, d'une instruction d'écriture de données pour écrire des données d'application ;
la détermination, par le dispositif informatique, que l'instruction d'écriture de données nécessite que les données d'application soient persistantes ou non ;
l'exécution, par le dispositif informatique et en réponse à une détermination que les données d'application sont persistantes, de l'instruction d'écriture de données dans une adresse mémoire de l'instruction d'écriture de données ;
la mise en cache, par le dispositif informatique, des données 2LM persistantes dans une mémoire volatile correspondante ; et
la mémorisation, par le dispositif informatique, des données 2LM persistantes dans un dispositif de mémoire non volatile correspondant.

9. Procédé selon la revendication 8, dans lequel la détermination que les données d'application doivent être persistantes ou non comprendre la détermination que l'adresse mémoire de l'instruction d'écriture de données est mappée ou non sur un espace d'adresses mémoire persistant qui est configuré pour fonctionner dans le mode 2LM persistant.

10. Procédé selon la revendication 7 comprenant en outre :
la réception, par le dispositif informatique, d'une instruction de lecture de données pour lire des données d'application ;
la détermination, par le dispositif informatique, que l'instruction de lecture de données nécessite que les données d'application soient persistantes ou non ;
l'exécution, par le dispositif informatique et en réponse à une détermination que les données d'application doivent être persistantes, de l'instruction de lecture de données dans une adresse mémoire de l'instruction de lecture de données ; et
la mise en mémoire cache, par le dispositif informatique, des données d'application dans un dispositif de mémoire volatile correspondant.

11. Un ou plusieurs supports de mémorisation lisibles par machine sur lesquels est mémorisée une pluralité d'instructions qui, à leur exécution par le dispositif informatique selon la revendication 1, amènent le dispositif informatique à réaliser le procédé selon l'une quelconque des revendications 7 à 10.
